Europäisches Patentamt

(19) European Patent Office

Office européen des brevets

(11) Veröffentlichungsnummer: **0 226 938**
**A2**

(12) **EUROPÄISCHE PATENTANMELDUNG**

(21) Anmeldenummer: **86117129.6**

(22) Anmeldetag: **10.12.86**

(51) Int. Cl.⁴: **G 06 K 9/60**

(30) Priorität: **23.12.85 DE 3545960**

(43) Veröffentlichungstag der Anmeldung:
**01.07.87 Patentblatt 87/27**

(84) Benannte Vertragsstaaten:
**BE DE FR NL SE**

(71) Anmelder: **Messerschmitt-Bölkow-Blohm Gesellschaft mit beschränkter Haftung**
**Robert-Koch-Strasse**
**D-8012 Ottobrunn(DE)**

(72) Erfinder: **Hammerer, Karl, Dr.**
**Beethovenring 14**
**D-8011 Neukeferloh(DE)**

(72) Erfinder: **Huber, Eric**
**Höhenkirchener Strasse 34**
**D-8011 Hohenbrunn(DE)**

(54) **Verfahren und Anordnung zur Erkennung von Teilen.**

(57) Das Verfahren zur Erkennung von Teilen, die in beliebiger Orientierung angeordnet sind, besteht in der Aufnahme, im Speichern und der Weiterverarbeitung von digitalisierten Bildern. Dabei werden eine Vielzahl von Bildern der zu handhabenden Teile in rascher Folge oder gleichzeitig und mit unterschiedlichen Lichtverhältnissen aufgenommen, die zwischen Kanten- und Konturenkontrasten und Flächenmerkmalen unterscheiden, wobei die so gewonnenen Bilder dahingehend verarbeitet werden, daß die Kanten- und Konturenkontraste verstärkt und die Flächenmerkmale eliminiert werden.

FIG. 1

EP 0 226 938 A2

# Verfahren und Anordnung zur Erkennung von Teilen

Die vorliegende Erfindung betrifft ein Verfahren und eine Anordnung zur Erkennung von Teilen oder zur Hervorhebung von Konturen von Objeten, die in beliebiger Orientierung angeordnet sind, durch Aufnahme, Speichern und Weiterverarbeitung von digitalisierten Bildern, z.B. zur Erhöhung der Kanten- und Konturenkontraste und um so Angreifpunkte für Handhabungsgeräte oder Prüfgeräte zu ermitteln.

Die automatische Handhabung von Teilen beliebiger Form gewinnt in Produktions- und Logistikprozessen zunehmend an Bedeutung. Häufig ist die Beschickung von hochautomatisieten Fertigungsstrassen der einzig verbliebene manuell durchgeführte Vorgang. Auch in Versandlagern tritt bei der Kommissionierung von Artikeln die für Menschen eintönige repetitive Aufgabe auf, Teile aus einem Behälter in einen anderen zu befördern.

Es wurde bereits versucht, derartige einfache Tätigkeiten zu automatisieren und zu diesem Zweck Handhabungsgeräte einzusetzen, die eine gewisse Bilderkennungsfähigkeit aufweisen müssen, die wegen der geforderten Geschwindigkeiten nur auf optischem ganzbildlichen Wege realisiert werden kann.

Der technologisch schwierigste Fall dieser Art von Bilderkennung tritt beim sogenannten "Griff in die Kiste" auf, da hier das Handhabungsgerät vor der Aufgabe steht, ein in beliebiger Orientierung vor dem Hintergrund gleicher Teile angeordnetes Teil in einem Behälter zu erkennen und einen Greifpunkt für den Ansatz des Handhabungsgerätes zu ermitteln. Dies wird oft noch dadurch erschwert, daß Merkmale

**MBB**

Patentabteilung

auf der Oberfläche der Teile, die zur Ermittlung des Greifpunktes nicht interessieren, größere Kontraste aufweisen als die eigentlich interessierenden Kanten. Diese Kontraste können z.B. bei Verpackungen vom Aufdruck herrühren, bei Metallteilen von unterschiedlicher Reflexion wegen unterschiedlicher Orientierung zur Lichtquelle, usw.

Es ist bekannt, ein in digitalisierter Form gespeichertes Bild derart zu bearbeiten, daß die Kantenkontraste erhöht oder die Grauwerte einander angeglichen werden. Hierbei ist ein einzelnes digitalisiertes Bild verwendet unter der Voraussetzung, daß die Konturen der zu ergreifenden Teile genügend deutlich von den anderen Bildelementen abgehoben sind (z.B. R.B. Kelley in Proceedings of the 7th International Conference on Industrial Robot Technology, Gothenburg, 2. - 4. Oktober 1984). Da diese Voraussetzung jedoch nur sehr selten erfüllt ist, haben derartige Handhabungsgeräte bisher trotz starken Bedarfs nur wenig praktischen Einsatz.

Diese Kantenkontrastverstärkung erfordert einen großen Rechenaufwand und damit auch einen großen Zeitaufwand.

Aufgabe der vorliegenden Erfindung ist es, ein Verfahren und eine Anordnung zur Erkennung von Teilen oder zur Hervorhebung von Merkmalen von Objekten zu schaffen, die mit erheblich geringerem Rechenaufwand und dadurch mit erheblich geringerem Zeitaufwand auskommen und damit eine rasche und sichere Erkennung von beliebig orientierten Teilen ermöglichen.

Ausgehend von dem Verfahren der eingangs näher genannten Art wird zur Lösung dieser Aufgabe vorgeschlagen, daß vor jedem Einsatz des Handhabungsgerätes eine Vielzahl von Bildern der zu handhabenden Teile oder Objekte in rascher Folge oder gleichzeitig und mit unterschiedlichen Lichtver-

*MBB*

Patentabteilung

hältnissen aufgenommen werden, die zwischen Kanten- und Konturenkontrasten und Flächenmerkmalen unterscheiden und daß die so gewonnenen Bilder dahingehend verarbeitet werden, daß die Kanten- und Konturenkontraste verstärkt und die Flächenmerkmale eliminiert werden.

Diese unterschiedlichen Lichtverhältnisse können entweder durch unterschiedliche Beleuchtungswinkel oder durch unterschiedliche Polarisierung der verwendeten Lichtquellen oder auch durch unterschiedliche spektrale Zusammensetzungen realisiert werden.

Die Weiterverarbeitung der Vielzahl von Bildern kann durch einfache Operationen an Pixeln und insbesondere durch Binärdarstellung um eine Grauwertgrenze erfolgen. Die Weiterverarbeitung kann aber auch durch einfache Verknüpfung entsprechender Pixel aufeinanderfolgender Bilder und insbesondere durch logische UND-Operationen erfolgen.

Eine erfindungsgemäße Anordnung zur Durchführung dieses Verfahrens besteht aus mindestens einer Videokamera , einer Beleuchungsanlage und einem Steuerrechner, wobei die Beleuchtungsanlage eine Vielzahl von Lichtquellen aufweist, denen ein Lichtquellensteuergerät zugeordnet ist, während gegebenenfalls den Kameraobjektiven eine Filteranordnung zugeordnet ist.

Vorteilhafterweise sind die Kameras CCD-Kameras, während die ihnen zugeordnete Filteranordnungen verschwenkbare Spektralfilter und/oder verschwenkbare und verdrehbare Polarisationsfilter sind, die per Fernsteuerung vom Rechner in den Strahlengang bzw. aus dem Strahlengang bewegbar sind.

Als Lichtquelle kommen Glühbirnen oder Blitzlampen mit zugeordneten Reflektoren in Frage oder auch Spiegel, die nacheinander einen umlaufenden gebündelten Strahl auf die

*MBB*

Patentabteilung

zu erkennenden Teile reflektieren.

Mit der Erfindung wird also der Vorteil erzielt, daß die wahllos angeordneten Teile mehrmals in rascher Folge oder gleichzeitig aufgenommen werden und zwar bei unterschiedlichen Aspektwinkeln der Beleuchtung und/oder verschiedenen Polarisationswinkeln und/oder verschiedenen spektralen Zusammensetzungen des Lichts. Die bereits während der Aufnahme digitalisierten und gegebenenfalls binär weiterverarbeiteten Bilder werden mittels einfacher logischer Verknüpfungen zu einem Bild zusammengesetzt, dessen Hauptmerkmal es ist, daß die Kanten und Konturen der Teile gegenüber ihren Oberflächenstrukturen hervorgehoben sind. Die erforderliche Apparatur besteht neben der Kamera und dem Bildverarbeitungsrechner aus mehreren verteilten Lichtquellen, einem Steuergerät und einem steuerbaren Filtervorsatz.

Mit der Erfindung wird ohne nennenswerte Verteuerung des gesamten Bilderkennungssystems und ohne nennenswerten Geschwindigkeitsverlust bei der Verarbeitung der Bilder eine erhebliche Verbesserung der Bilderkennungsfähigkeit der Handhabungsgeräte erreicht.

Im folgenden wird die Erfindung anhand der Zeichnung näher erläutert, in der ein vorteilhaftes Ausführungsbeispiel dargestellt ist. Es zeigen:

Figur 1 schematisch eine Anordnung zur Erkennung der Teile;
Figur 2 ein ursprüngliches Grauwertbild ohne Verarbeitung und

Figur 3 ein mit dieser Anordnung erzieltes Bild.

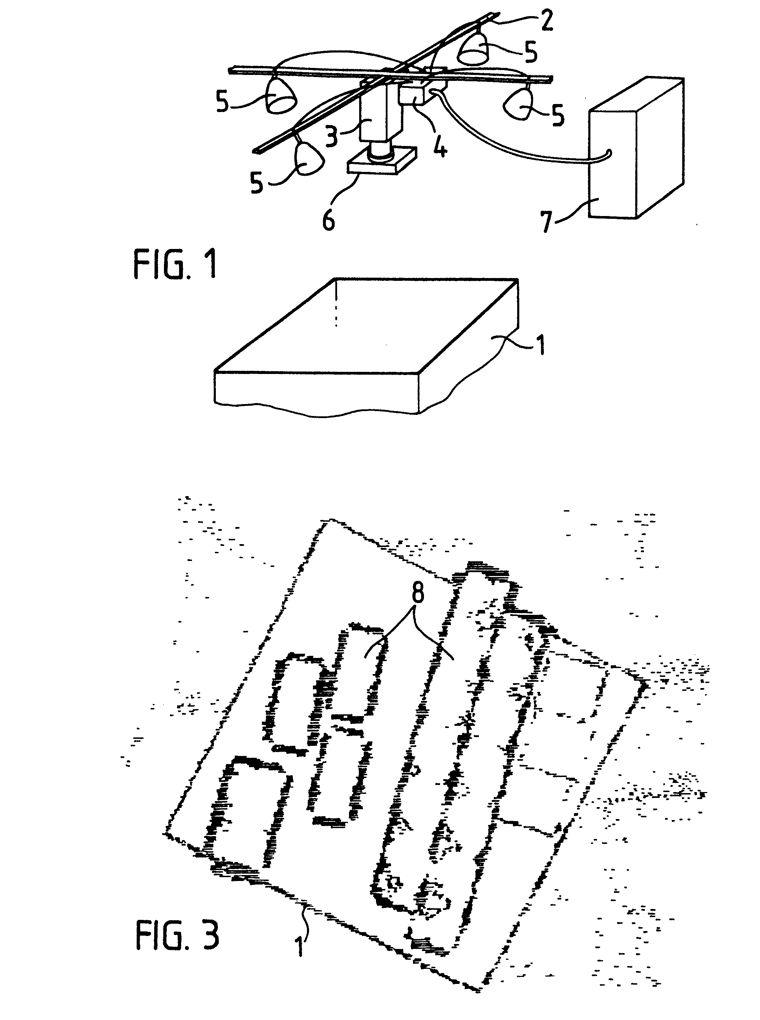

Bei dem in Figur 1 dargestellten Ausführungsbeispiel einer erfindungsgemäßen Anordnung ist mit 1 ein Behälter bezeichnet, in dem eine Vielzahl von Teilen in regelloser Orien-

MBB

Patentabteilung

tierung nebeneinander und übereinander angeordnet sind. Oberhalb des Behälters 1 ist ein Gestell 2 angeordnet, mit einer Videokamera 3, die vorteilhafterweise eine CCD-Kamera ist und der ein Steuergerät 4 zugeordnet ist. Im gewählten Ausführungsbeispiel sind vier Lichtquellen 5 verteilt derart angeordnet, daß sie die Teile im Behälter 1 aus unterschiedlichen Richtungen beleuchten. Vor dem Objektiv der Kamera 3 ist eine Filteranordnung 6 vorgesehen, die Spektralfilter und/oder Polarisationsfilter enthalten kann und die mittels Fernsteuerung durch einen Rechner 7 in den Strahlengang verschwenkbar bzw. aus dem Strahlengang verschwenkbar und in ihm verdrehbar sein können. Die Kamera 3 ist über geeignete Video- und Steuerkabel mit einem Steuerrechner 7 verbunden, in dem auch die Bildverarbeitung erfolgt. Mit 4 ist das Lichtquellensteuergerät bezeichnet, das ebenso wie die Filteranordnung 6 über Steuerleitungen mit dem Rechner 7 verbunden ist, wobei das Lichtquellensteuergerät 4 außerdem noch mit der Kamera 3 verbunden ist.

Das Lichtquellensteuergerät 4 hat die Aufgabe auf Befehl des Rechners 7 eine der Lichtquellen 5 einzuschalten und im geeigneten Zeitpunkt an die Kamera 3 das Auslesekommando zu geben, worauf diese Kamera das Videosignal zum Rechner überträgt, wo es digitalisiert und im Bildspeicher abgelegt wird. Notwendige Einstellungen der Filteranordnung 6 steuert der Rechner 7 im voraus durch Befehle an die Filteranordnung 6.

Die Lichtquellen 5 können Glühbirnen oder Blitzlampen mit Reflektor sein. Sie können auch als Spiegel ausgestaltet sein, die einen, analog einem Leuchtturm umlaufenden gebündelten Lichtstrahl kurzzeitig auf den Behälter 1 reflektieren. In diesem Fall wird das Auslesen der von der Kamera 3 gesammelten Bildinformation durch Lichtsensoren in den Spiegeln getriggert.

Nachdem ein Bild durch die erste Lichtquelle 5 aufgenommen worden ist, werden die folgenden Lichtquellen nacheinander eingeschaltet und weitere Bilder von der Kamera 3 nacheinander aufgenommen und an den Rechner 7 geliefert, bevor ein nicht dargestelltes Handhabungsgerät eines der Teile ergreift und aus dem Behälter 1 befördert. Die Bilder werden also gemäß der Anzahl der Lichtquellen 5 in rascher Folge aufgenommen, jedoch mit unterschiedlichen , zwischen Kantenkontrasten und Flächenmerkmalen diskriminierenden Lichtverhältnissen, wonach die so gewonnenen Bilder mittels einfacher Operationen an Pixeln (z.B. Binärdarstellung um eine Grauwertgrenze) oder einfacher Verknüpfung entsprechender Pixel der aufeinanderfolgenden Bilder (z.B. logische UND-Operationen) in den gewünschten Merkmalen verstärkt und die unerwünschten Merkmale eliminiert werden.

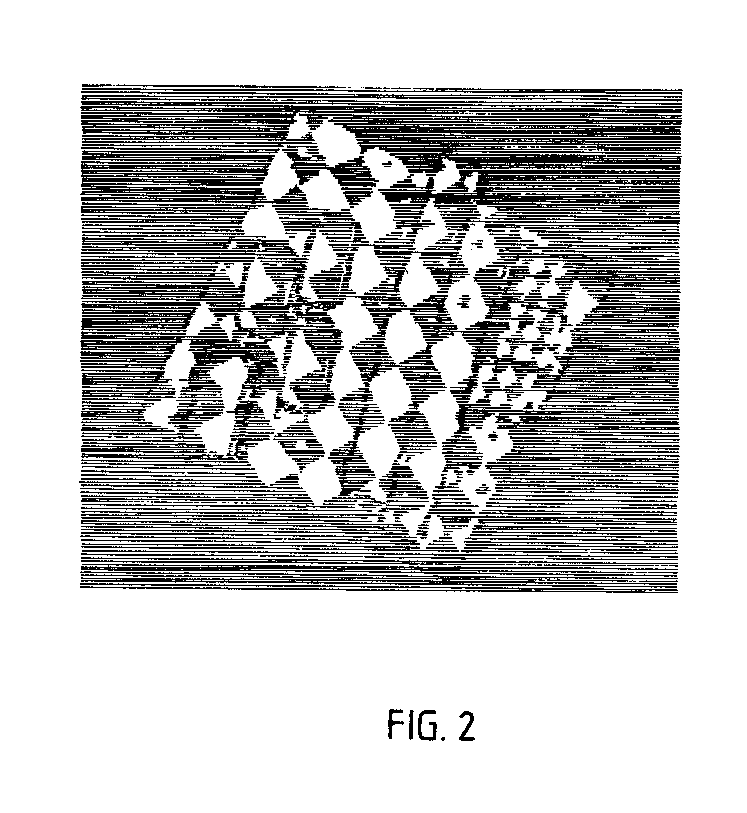

Figur 2 zeigt ein Beispiel einer Aufnahme der in einem Behälter 1 angeordneten Teile 8 nach viermaliger Aufnahme unter verschiedenen Beleuchtungswinkeln (die verschiedenen Schattenwurf erzeugen), Binärdarstellung jeder der Einzelaufnahmen um einen geeigneten Schwellwert und pixelweiser Verknüpfung der vielen Binärbilder durch logische UND-Operationen. Die Kantenkontraste sind derart verstärkt, daß nunmehr ein geeignetes Mittel zur Steuerung des Handhabungsgerätes gegeben ist, das an den entsprechenden Kanten angreift und das Teil aus dem Behälter 1 befördert.

86 117 12.6.6
0226938

# Verfahren und Anordnung zur Erkennung von Teilen

## Patentansprüche

1. Verfahren zur Erkennung von Teilen oder zur Hervorhebung von Merkmalen von Objekten, die in beliebiger Orientierung angeordnet sind, durch Aufnahme, Speichern und Weiterverarbeitung von digitalisierten Bildern, z.B. zur Erhöhung der Kanten- und Konturenkontraste um so Angreifpunkte für Handhabungsgeräte oder Prüfgeräte zu ermitteln, dadurch gekennzeichnet, daß vor jedem Einsatz des Handhabungsgerätes eine Vielzahl von Bildern der zu handhabenden oder zu prüfenden Teile und/oder Objekte in rascher Folge oder gleichzeitig und mit unterschiedlichen Lichtverhältnissen aufgenommen werden, die zwischen Kantenkontrasten und Flächenmerkmalen unterscheiden und daß die so gewonnenen Bilder dahingehend verarbeitet werden, daß die Kanten- und Konturenkontraste verstärkt und die Flächenmerkmale eliminiert werden.

2. Verfahren nach Anspruch 1, dadurch gekennzeichnet, daß die unterschiedlichen Lichtverhältnisse durch unterschiedliche Beleuchtungswinkel realisiert werden.

3. Verfahren nach Anspruch 1, dadurch gekennzeichnet, daß die unterschiedlichen Lichtverhältnisse durch unterschiedliche Polarisierung der verwendeten Lichtquellen realisiert werden.

*MBB*

Patentabteilung

4. Verfahren nach Anspruch 1, dadurch gekennzeichnet, daß die unterschiedlichen Lichtverhältnisse durch Lichtquellen unterschiedlicher spektraler Zusammensetzung realisiert werden.

5. Verfahren nach Ansprüchen 1 bis 4, dadurch gekennzeichnet, daß die Weiterverarbeitung der Vielzahl von Bildern durch einfache Operationen an Pixeln und insbesondere durch Binärdarstellung um eine Grauwertgrenze erfolgt.

6. Verfahren nach einem der Ansprüche 1 bis 4, dadurch gekennzeichnet, daß die Weiterverarbeitung der Vielzahl von Bildern durch einfache Verknüpfung entsprechender Pixel aufeinanderfolgender Bilder und insbesondere durch logische UND-Operationen erfolgt.

7. Anordnung zur Durchführung des Verfahrens nach einem oder mehrerer der Ansprüche 1 bis 6, bestehend aus mindestens einer Videokamera, einer Beleuchtungsanlage und einem Steuerrechner, dadurch gekennzeichnet, daß die Beleuchtungsanlage eine Vielzahl von verteilt angeordneten Lichtquellen aufweist, denen ein Lichtquellensteuergerät zugeordnet ist und daß gegebenenfalls den Kameraobjektiven eine Filteranordnung zugeordnet ist.

8. Anordnung nach Anspruch 7, dadurch gekennzeichnet, daß die Kameras eine CCD-Kamera sind und die ihr zugeordnete Filteranordnungen verschwenkbare Spektralfilter und/ oder verschwenkbare und drehbare Polarisationsfilter sind, die per Fernsteuerung vom Rechner in den Strahlengang bzw. aus dem Strahlengang bewegbar sind.

9. Anordnung nach Ansprüchen 7 und 8, dadurch gekennzeichnet, daß die Lichtquellen Glühbirnen oder Blitzlampen mit zugeordneten Reflektoren sind.

10. Anordnung nach Ansprüchen 7 und 8, dadurch gekennzeichnet, daß die Lichtquellen Spiegel sind , die nacheinander einen umlaufenden gebündelten Strahl auf die zu erkennenden Teile oder Objekte reflektieren.

11. Anordnung nach Anspruch 7, gekennzeichnet durch mehrere Kameras und mehrere Strahlungsquellen, wobei die Kameras und die Strahlungsquellen einander derart zugeordnet sind, daß verschiedene Kameras für verschiedene Strahlungsquellen unterschiedliche Empfindlichkeiten aufweisen.

0226938

FIG. 1

FIG. 3

9887

0226938

FIG. 2

9887